# EUROPÄISCHE PATENTSCHRIFT

(11) **EP 1 587 023 B1**
(45) Veröffentlichungstag und Bekanntmachung des Hinweises auf die Patenterteilung: **26.09.2007**
(21) Anmeldenummer: 05007836.9
(22) Anmeldetag: 09.04.2005
(51) Int. Cl.: G06K 7/00, G06K 19/07, G08C 17/02, H04L 29/06

(54) **Verfahren zur Datenkommunikation zwischen einer Basisstation und einem Transponder**
Method for data communication between a base station and a transponder
Procédé de communication de données entre une station de base et un transpondeur

(30) Priorität: 14.04.2004 DE 102004018539
(43) Veröffentlichungstag der Anmeldung: 19.10.2005
(73) Patentinhaber: ATMEL Germany GmbH, 74072 Heilbronn (DE)
(72) Erfinder: Friedrich, Ulrich, Dipl.-Ing. (FH), 74248 Ellhofen (DE)

(56) Entgegenhaltungen:
- EP-A- 1 501 250
- EP-A- 1 508 870
- DE-A1- 10 138 217
- DE-A1- 10 204 347
- ANNALA, L A; FRIEDRICH, U: "Palomar - an European answer for passive UHF RFID applications?"[Online] 3. September 2001 (2001-09-03), Seiten 1-7, XP002337562 Heilbronn, Germany Gefunden im Internet: URL:http://www.atmel.com/products/RD/docum ents/palomar_v1.pdf> [gefunden am 2005-07-25]
- ISO: "ISO 18000-6: RFID for item management, part 6" ISO STANDARDS, 15. August 2004 (2004-08-15), Seiten 1-134, XP001207216

## Beschreibung

Die Erfindung betrifft ein Verfahren der im Oberbegriff des Patentanspruchs 1 genannten Art, also ein Verfahren zur Datenkommunikation zwischen einer Basisstation und zumindest einem Transponder mittels eines hochfrequenten elektromagnetischen Trägersignals, auf welchem Informationspakete aufmoduliert sind, wobei jeweils ein Informationspaket einen Kopfabschnitt, einen Mittelabschnitt und einen Endabschnitt aufweist, wobei der Kopfabschnitt in einem Vorwärtslink einer Datenkommunikation zwischen Basisstation und Transpondern zur Steuerung der Datenkommunikation vorgesehen ist, wobei der Kopfabschnitt in einem Rückwärtslink einer Datenkommunikation genutzt wird, um Informationen von einem Transponder zu der mit diesem Transponder kommunizierenden Basisstation zu übermitteln. Die Erfindung betrifft ferner eine Basisstation und ein Datenkommunikationssystem.

Die Erfindung liegt auf dem Gebiet der Transpondertechnologie und insbesondere im Bereich der kontaktlosen Kommunikation zum Zwecke der Identifikation. Wenngleich prinzipiell auf beliebige Kommunikationssysteme anwendbar, werden die vorliegende Erfindung sowie die ihr zugrunde liegende Problematik nachfolgend in Bezug auf so genannte RFID-Kommunikationssysteme und deren Anwendungen erläutert. RFID steht dabei für "Radio Frequency Identification". Zum allgemeinen Hintergrund dieser RFID-Technologie wird auf das "RFID-Handbuch" von Klaus Finkenzeller, Hanser Verlag, dritte aktualisierte Auflage, 2002 verwiesen.

Bei Transpondern wird ein von einer Basisstation ausgesendetes elektromagnetisches Signal von dem Transponder aufgenommen und demoduliert. Man unterscheidet hier aktive, semipassive und passive Transponder, je nach dem wie deren Energieversorgung ausgebildet ist. Im Unterschied zu aktiven Transpondern weisen passive Transponder keine eigene Energieversorgung auf, so dass die im Transponder für die Demodulation und Dekodierung des empfangenen elektromagnetischen Signals benötigte Energie aus eben diesem, von der Basisstation gesendeten elektromagnetischen Signal selbst entnommen werden muss. Neben dieser unidirektionalen Energieübertragung erfolgt typischerweise auch eine bidirektionale Datenkommunikation zwischen Basisstation und Transponder.

Grundlage der bidirektionalen Datenübertragung zwischen Basisstation und Transponder bildet ein so genanntes Kommunikationsprotokoll, das neben den zu übertragenden Dateninformationen auch Steuerinformationen für die Datenkommunikation festlegt.

Ein RFID-Kommunikationsprotokoll für eine bekannte Datenkommunikation zwischen Basisstation und Transponder ist in der Deutschen Offenlegungsschrift DE 101 38 217 A1 beschrieben. Demnach weist ein von der Basisstation zu einem Transponder zu übertragendes Informationspaket zumindest einen Kopfabschnitt, einen Mittelabschnitt sowie einen Endabschnitt auf. Über den Kopfabschnitt wird die Anzahl der zu übertragenden Daten und deren Kennung definiert. Der Mittelabschnitt enthält die jeweils zu übertragenden Daten. Im Endabschnitt wird dem Empfänger der jeweils gesendeten Daten das Ende des Informationspaketes mitgeteilt. Ab gesichert wird die Datenkommunikation mit Sicherungsmechanismen wie zum Beispiel einem CRC-Sicherungsfeld oder Parity-Bits.

Ein gattungsgemäße RFID-Verfahren und System zur bidirektionalen Datenkommunikation ist auch Gegenstand des so genannten Palomar-Projekts, welches von der Europäischen Kommission im Rahmen des so genannten IST-Programms gegründet wurde. Hinsichtlich des Inhalts dieses Palomar-Projekts wird auf die diesbezügliche, allgemein zugänglich Veröffentlichung der Europäischen Kommission vom 11.01.2002, die im Wesentlichen der ISO-Norm 18000-6 entspricht, verwiesen.

Zum weiteren Hintergrund der bidirektionalen Datenkommunikation zwischen Basisstation und Transponder sei noch auf die Deutschen Offenlegungsschriften DE 102 04 317 A1, DE 100 50 878 A1, DE 102 04 346 A1 und die Europäische Patentschrift EP 473 569 B1 verwiesen.

In den meisten UHF und Mikrowellen basierenden RFID-Systemen bzw. Sensorsystemen wird die Datenkommunikation zwischen Basisstation und Transponder zunächst von der Basisstation eingeleitet, indem von der Basisstation ein Anfragesignal (Kommando, data request) zu den verschiedenen, sich in der Umgebung der Basisstation befindlichen Transpondern gesendet wird. Der oder die an der Datenkommunikation teilnehmenden Transponder reagieren auf diese Anfrage typischerweise mit einem Antwortsignal (response).

Für die Datenübertragung von einer Basisstation zu einem Transponder und zurück mittels UHF-Wellen und Mikrowellen wird unter anderem die so genannte Backscatter- oder Rückstreutechnik eingesetzt. Bei diesem Verfahren werden zunächst von der Basisstation hochfrequente elektromagnetische Trägersignale emittiert, die von der Sende- und Empfangseinrichtung des Transponders aufgenommen und verarbeitet werden. Darüber hinaus werden die empfangenen Signale mit einem gängigen Modulationsverfahren moduliert und unter Verwendung des Rückstreuquerschnitts der Sende/Empfangsantenne des Transponders wieder zurück gestreut. Ein typisches Modulationsverfahren hierfür sind die Amplitudenmodulation, die Phasenmodulation und die Amplituden Shift Keying (ASK) Seitenträgermodulation des Rückstreusignals, bei dem die Frequenz und/oder die Phasenlage der Seitenbänder geändert wird.

Die zu übertragenden Daten werden mit Hilfe von Symbolen kodiert und übertragen, welche zum Beispiel über den Kopfabschnitt eines Informationspakets definiert werden. Ein Symbol dient dabei der Definition beziehungsweise Interpretation des Wertes eines zu übertragenden Zeichens. Ein Symbol wird üblicherweise mit Hilfe einer Zeitdauer zwischen zwei aufeinanderfolgenden Feldlücken, den so genannten "Notches", dargestellt. Eine derartige Feldlücke kann bei einer Amplitudenmodulation beispielsweise durch Unterdrückung beziehungsweise Dämpfung des Trägersignals oder bei einer Zwei-Seiten-Bandmodulation durch Umschalten der Phasenlage des Trägersignals erzeugt werden. Der Transponder dekodiert empfangene Informationspakete auf der Basis der im Kopfabschnitt definierten Symbole beziehungsweise anhand der den Symbolen zugeordneten Zeitdauern, indem er zur Bestimmung des Wertes eines übertragenen Symbols dessen Zeitdauer mit der im Kopfabschnitt vorgegebenen Zeitdauer eines Symbols vergleicht.

Durch die Wahl des Zeitintervalls beziehungsweise der den Symbolen zugeordneten Zeitdauern ist es möglich, die Übertragungsrate innerhalb eines bestimmten Bereichs an die Übertragungsbedingungen anzupassen.

In der deutschen Offenlegungsschrift DE 102 04 347 A1 ist ein Verfahren zur Übertragung von Daten beschrieben, bei dem im Kopfabschnitt Zeitpunkte beziehungsweise Referenzzeiten definiert werden. Nur zu diesen vordefinierten Zeitpunkten wird die Trägerwelle untersucht. Mit diesem Verfahren wird durch die Änderung des Modulationszustandes an vordefinierten Zeitpunkten eine Fehlerkorrektur während der Datenübertragung ermöglicht.

Das US-Patent 5,649,295 beschreibt ein RFID-Kommunikationssystem, bei dem die Datenrückübertragung unter Verwendung eines Backscatter-Verfahrens erfolgt. Die Basisstation überträgt hier eine erste Information an zumindest einen Transponder des Kommunikationssystems, die das von der Basisstation gesendete Signal aufnehmen, es dekodieren und daraus die erste Information entnehmen. Die Transponder weisen ferner einen Backscatter-Modulator auf, der das von dem gesendeten Signal abgeleitete rückgestreute Signal moduliert, indem es eine zweite Information, die aus der ersten Information abgeleitet ist, verwendet. Der Inhalt der zweiten Information im rückgestreuten Signal enthält zum Beispiel die Datenrate oder die Modulation für die vom Transponder rückgestreuten Signale.

Ein ähnliches Verfahren zur Datenkommunikation zwischen Basisstation und Transponder, bei dem die Basisstation eine Information für die Transponderbetriebsinformationen, wie zum Beispiel dessen Modulation oder Datenrate, steuert, ist in der deutschen Patentanmeldung mit dem amtlichen Aktenzeichen DE 10335003.9. (entspricht EP 1 508 870) beschrieben. Die Basisstation überträgt dort ein Informationspaket, bestehend aus Kopfabschnitt, Datenabschnitt und Endabschnitt. Während der Übertragung des Kopfabschnitts eines Informationspakets durch die Basisstation überträgt der mit dieser Basisstation kommunizierende Transponder unter Verwendung des Backscatter-Verfahrens Betriebsinformationen des Transponders, welche die Bearbeitung von zu empfangenen und/oder zu sendenden Daten durch den Transponder betreffen. Die Basisstation empfängt diese Transponderbetriebsinformationen und stellt anhand dieser Informationen mindestens einen Übertragungsparameter für die weitere Datenkommunikation zwischen Basisstation und Transponder ein.

Die meisten UHF- und Mikrowellen-basierenden RFID-Systeme beziehungsweise Sensorsysteme sind als so genannte Master-Slave-Systeme ausgebildet. Bei derartigen Master-Slave-basierenden RFID-Systemen wird die Datenkommunikation zwischen Basisstation und Transponder von der Basisstation gesteuert. Wie in der DE 102 04 347 A1 beschrieben, erfolgt die Steuerung über den Kopfabschnitt eines Informationspakets. Über diesen Kopfabschnitt beziehungsweise der darin enthaltenen Information stellt die Basisstation damit Betriebsparameter des Transponders ein.

Bestehende RFID-Systeme unterscheiden sich aber insbesondere durch die Verwendung unterschiedlichster Transponder, wobei sich die Unterschiede der verschiedenen Transponder im Wesentlichen aus deren unterschiedlichen Funktionalität ableiten. Insbesondere asynchron arbeitende Transponder müssen ihre Taktfrequenz über einen eigenen, Transponder-internen Taktgenerator selbst erzeugen.

Problematisch daran ist, dass die genaue Taktrate des Transponders der Basisstation allerdings nicht bekannt ist. Darüber hinaus ist der Basisstation ebenfalls nicht bekannt, mit welcher Auflösung ein jeweiliger Transponder arbeitet. Dies ist insbesondere für die Demodulation und Dekodierung der von der Basisstation gesendeten Signale durch den Transponder besonderem schwerwiegend, da solche preisgünstigen Transponder mit einer sehr geringen Auflösung nicht in der Lage sind, die zum Beispiel mit einer hohen Datenübertragungsrate von der Basisstation gesendeten Symbole mit einer hohen Sicherheit zu dekodieren. Vor allem aber bei sehr hohen Datenübertragungsraten ist es für solche Transponder aufgrund deren geringen Auflösung daher entsprechend schwierig, die verschiedenen Symbole, beispielsweise "0", " "1", "EOT", voneinander zu unterscheiden. Eine Datenkommunikation mit solchen so genannten "Low-Cost"-Transpondern ist daher vergleichsweise fehleranfällig, insbesondere dann, wenn die Basisstation über den Kopfabschnitt einem solchen Transponder mitteilt, dass eine höhere Datenübertragungsrate gewünscht ist, der Transponder dies bedingt durch seinen Aufbau aber nicht unterstützt.

In der oben bereits erwähnten DE 101 38 217 A1, gegen die die Ansprüche abgegrenzt wurden, ist ein Verfahren beschrieben, bei dem ein Transponder Informationen bezüglich seiner Versorgungsspannung an die Basisstation überträgt. Im Rückwärtslink der Datenkommunikation werden Informationen von einem Transponder zu der mit diesem Transponder kommunizierenden Basisstation übermittelt (bei den Informationen handelt es sich um den Wert der Versorgungsspannung - "Feldstärkeinformation", den der Transponder der Basisstation wiederholt mitteilt). Die Basisstation paßt abhängig von dieser Information die Länge der Modulationsintervalle für die Codierung der Daten bzw. die Datenrate an, so daß die Datenrate und die Reichweite der Kommunikation optimiert werden.

In der nicht vorveröffentlichten, oben bereits erwähnten EP 1 508 870 A1 ist ein Verfahren beschrieben, bei dem der Transponder Betriebsinformationen hinsichtlich seines zeitlichen Auflösungsvermögens an die Basisstation überträgt.

Vor diesem Hintergrund liegt der vorliegenden Erfindung nun die Aufgabe zugrunde, eine bessere und insbesondere flexiblere Datenkommunikation zwischen Basisstation und Transponder zu ermöglichen. Die Datenkommunikation bzw. das Datenkommunikationssystem soll möglichst auch an die jeweils verwendeten Transponder anpassbar sein. Eine weitere Aufgabe der vorliegenden Erfindung besteht darin, die Dauer einer Datenkommunikation weniger fehleranfällig zu gestalten.

Erfindungsgemäß wird zumindest eine dieser Aufgaben durch ein Verfahren zur Datenkommunikation mit den Merkmalen des Patentanspruchs 1, eine Basisstation mit den Merkmalen des Patentanspruchs 20 sowie ein RFID-Datenkommunikationssystem mit den Merkmalen des Patentanspruchs 21 gelöst.

Die der vorliegenden Erfindung zugrunde liegende Idee besteht darin, den Kopfabschnitt im Rückwärtslink einer Datenkommunikation zwischen Basisstation und Transponder für eben diese Datenkommunikation zu nutzen. Hierzu überträgt der Transponder vorteilhafterweise im Kopfabschnitt, beispielsweise im ersten oder im zweiten Symbol oder alternativ auch im dritten oder vierten Symbol des Kopfabschnittes, zumindest eine Referenzmarke zur Basisstation, die die Basisstation nun für die weitere Datenkommunikation auswerten kann. Die Basisstation kann nach Auswertung dieser Referenzmarken die weiteren Kennungen im Kopfabschnitt des Vorwärtslinks gezielt einstellen. Auf diese Weise wird im Unterschied zu den bekannten Steuermechanismen, die bei der vorstehenden Würdigung des Standes der Technik ausführlich beschrieben wurden, das erfindungsgemäße Datenkommunikationssystem zu einem Regelungssystem (engl.: Closed Loop System) erweitert. Hier interagieren die Basisstation und der Transponder miteinander derart, dass der Transponder auf von der Basisstation gesendete Betriebs- und Steuerinformationen hin nun seinerseits der Basisstation entsprechende Informationen über seine Betriebsressourcen übermittelt.

Die der vorliegenden Erfindung zugrunde liegende Idee besteht vor allem auch darin, den Kopfabschnitt im Rückwärtslink eines Informationspakets dazu zu benutzen, eine Datenkommunikation zwischen Basisstation und Transponder aufzubauen und dann weiter zu optimieren. Diese Datenkommunikation beschreibt ein so genanntes Closed-Loop-Regelungsprinzip, welches der Basisstation somit vorteilhafterweise die Möglichkeit bietet, die Betriebsparameter des Transponders sehr schnell einzustellen bzw. anzupassen. Insbesondere eignet sich das erfindungsgemäße Verfahren besonders für solche Fälle, bei denen sich gegebenenfalls die Transponder inhärenten Betriebsparameter beispielsweise durch äußere Einflüsse ändern. In diesem Falle wird durch den erfindungsgemäßen Regelungsmechanismus bei der Datenkommunikation zwischen Basisstation und Transponder eine sehr schnelle und insbesondere dynamische Einstellung der optimalen Betriebsparameter für den Transponder ermöglicht.

Der besondere Vorteil dieses Regelungssystems besteht auch darin, dass die Basisstation die weitere Datenkommunikation optimal an die von den jeweiligen Transpondern zur Verfügung stehenden Ressourcen anpassen kann, da die Basisstation diese nunmehr kennt. Bei bestehenden Systemen, bei denen die Basisstation lediglich Steuerinformationen für die gewünschten Betriebsinformationen eines Transponders übermittelt hat, hatte die Basisstation hingegen keinerlei Informationen über die tatsächlich von einem Transponder zur Verfügung stehenden Ressourcen. Die Basisstation konnte damit durch die ihr zur Verfügung stehenden Steuermechanismen die weitere Datenkommunikation somit auch nicht optimal an die zur Verfügung stehenden Ressourcen und Betriebsmodi der jeweiligen Transponder anpassen.

Mittels des erfindungsgemäßen Regelungsmechanismus wird auch eine Verifikation der von der Basisstation in seinem Kopfabschnitt gesendeten Steuerinformationen möglich. Es ist somit auch möglich, nach einer Verifikation durch die Basisstation durch Versendung weiterer Kennungen im Kopfabschnitt die weitere Datenkommunikation von der Basisstation zu den Transpondem und zurück weiter zu optimieren.

Vorteilhafte Ausgestaltungen und Weiterbildungen der Erfindung sind in den Unteransprüchen sowie in der Beschreibung unter Bezugnahme auf die Zeichnung entnehmbar.

Mittels der von einem Transponder in seinem Kopfabschnitt übermittelten Referenzmarken kann dieser verschiedene Betriebsinformationen sowie Informationen über seine Ressourcen an die Basisstation übermitteln.

Mittels dieser Referenzmarke kann der Transponder beispielsweise Information an die Basisstation übermitteln, die beinhalten, mit welcher Auflösung er die von der Basisstation gesendeten Signale dekodiert.

Erfindungsgemäß übermittelt ein Transponder eine Information über seinen Betriebsmodus, das heißt, ob er synchron oder asynchron betrieben wird, an die Basisstation.

Im Falle eines asynchronen Betriebsmodus muss der Transponder seinen Systemtakt selbst erzeugen. In diesem Falle bietet sich auch an, dass der Transponder eine Information über seinen Systemtakt an die Basisstation übermittelt.

Darüber hinaus kann ein Transponder auch eine Information über die Modulation des Transponders enthalten.

In einer vorteilhaften Ausgestaltung übermittelt der Transponder im Kopfabschnitt des Rückwärtslinks zumindest eine Referenzmarke an die Basisstation übermittelt, welche von der Basisstation für die weitere Datenkommunikation ausgewertet wird. Nach Auswertung dieser zumindest einen Referenzmarke von der Basisstation wird die Steuerinformationen im Kopfabschnitt des Vorwärtslinks an die zumindest eine ausgewertete Referenzmarke angepasst. Indem die Basisstation die vom Transponder zurückgesendeten Referenzmarken, die Informationen über die Modulation, die Auflösung, die Datenrate und/oder weitere betriebsrelevanten Informationen des Transponders enthalten können, auswertet, kann die Basisstation im nächsten Schritt vorteilhafterweise einige oder alle dieser Parameter optimieren. Insbesondere ist die Basisstation nun in der Lage, die Datenrate, mit der die Datenkommunikation von der Basisstation zu dem Transponder und zurück fortgesetzt werden soll, derart zu definieren, dass damit eine optimale, an die oben genannten Parameter angepasste Datenkommunikation erfolgen kann. Zusätzlich oder alternativ kann die Basisstation auch eine gewünschte Modulation der Basisstation und des Transponders, die voraussichtlich eine möglichst sichere und effektive Datenkommunikation sicher stellt, vorgeben.

Eine die Taktinformation enthaltende Referenzmarke, die zum Beispiel vom Transponder zu der Basisstation gesendet wird, wird vorzugsweise im ersten Symbol des Kopfabschnitts im Rückwärtslink übertragen.

In einer vorteilhaften Ausgestaltung wird im Vorwärtslink eine erste Referenzzeit vorgegeben, über welche eine einen logischen ersten Wert repräsentierende zweite Referenzmarke und eine einen logischen zweiten Wert repräsentierende dritte Referenzmarke definiert werden. Indem die Basisstation die über die Referenzmarken im Rückwärtslink von dem Transponder übertragenen Informationen auswertet, kann sie die erste Referenzzeit optimal an die jeweiligen gewonnenen Informationen anpassen. Insbesondere kann sie dabei die erste Referenzzeit gezielt auf die jeweils von dem Transponder verwendete Auflösung einstellen. Die erste Referenzzeit wird vorzugsweise im zweiten Symbol des Kopfabschnitts im Vorwärtslink von der Basisstation vorgegeben. Vorteilhafterweise kann so die Präambel im Rückwärtslink signifikant verkürzt werden.

Insbesondere für solche Datenkommunikationssysteme, bei denen die Basisstation die von dem Transponder beispielsweise im Rückwärtslink oder durch Backscattering rückübertragenen Informationen auswertet, muss der Basisstation zunächst mitgeteilt werden, zu welchem Zeitpunkt innerhalb des jeweiligen Symbols ein im Rückwärtslink übertragenes Signal als logische Null ("0") oder als logische Eins ("1") interpretiert werden kann. Dies wird vorteilhafterweise ebenfalls über die von dem Transponder im Rückwärtslink übertragenen Referenzmarken realisiert. Hier ist insbesondere vorgesehen, dass der Transponder eine eine logische Null repräsentierende Referenzmarke in einem ersten Symbol und eine eine logische Eins repräsentierende Referenzmarke in einem zweiten Symbol überträgt. Die die logische Null und die logische Eins repräsentierenden Referenzmarken weisen innerhalb ihrer Symbole unterschiedliche Zeitabstände bezogen auf die jeweiligen Notches auf. Diese Informationen können nun von der Basisstation für die weitere Datenkommunikation und insbesondere für die Auswertung der von dem Transponder gesendeten Signale verwendet werden, da die Basisstation nun weiß, an welcher Stelle innerhalb eines Symbols eine eine logische Null repräsentierende Referenzmarke beziehungsweise eine eine logische Eins repräsentierende Referenzmarke zu erwarten ist.

In einer vorteilhaften Ausgestaltung wird im Vorwärtslink eine zweite Referenzzeit vorgegeben, über welche eine Taktinformation und/oder Frequenzinformation an den Transponder übermittelt wird.

In einer vorteilhaften Ausgestaltung wird die zweite Referenzzeit von der Basisstation im vierten Symbol des Kopfabschnitts im Vorwärtslink vorgegeben wird.

In einer vorteilhaften Ausgestaltung weist der Kopfabschnitt des Vorwärtslinks und/oder des Rückwärtslinks insgesamt vier Symbole auf.

Eine Referenzmarke wird zum Beispiel durch eine Amplitudenänderung, also durch eine Anhebung oder auch durch eine Absenkung der Amplitude im vom Transponder zurückgesendeten Signal gebildet. Alternativ kann eine Referenzmarke auch durch Ausschalten der transponderseitigen Modulation für eine vorgegebene Zeitdauer gebildet werden.

In einer besonders vorteilhaften Ausgestaltung lassen sich die eben genannten Referenzmarken beziehungsweise deren zeitliche Abstände zueinander und/oder deren zeitliche Abstände zu den jeweiligen Notches unter Steuerung der Basisstation entsprechend verändern. Insbesondere lassen sich dabei die zeitlichen Abstände entsprechend an die für eine Basisstation und den entsprechenden, mit diesem kommunizierenden Transponder gegebenen Betriebsparameter und damit auf eine optimale Datenübertragungsrate und Modulation anpassen.

In einer ebenfalls sehr vorteilhaften Ausgestaltung der Erfindung kann nun vorgesehen sein, dass ein vorgegebenes Zeitintervall vorgesehen ist, welches die Zeitpunkte umfasst, bei denen die erste und die zweite Referenzmarke für eine logische Null beziehungsweise eine logische Eins zu erwarten sind. Indem lediglich die Zeitpunkte, die für die logische Null beziehungsweise die logische Eins relevant sind, für die Erkennung der Referenzmarken und damit für die Demodulation und Dekodierung betrachtet werden, können die übrigen Bereiche eines Symbols vorteilhafterweise nicht berücksichtigt und damit ausgeblendet werden.

Zum einen geht damit vorteilhafterweise ein geringerer Auswerteaufwand und damit Rechenaufwand einer programmgesteuerten Einrichtung, beispielsweise eines Mikrocontrollers oder Mikroprozessors einher, der dann für andere Anwendungen zur Verfügung steht. Durch Verringerung des Auswerteaufwands ergibt sich daher auch eine geringere Leistungsaufnahme des gesamten Systems.

Zum anderen wird dadurch die Sicherheit der Demodulation und Dekodierung signifikant gesteigert. Insbesondere werden solche Marken, die zwar aufgrund ihrer Signalform einer Referenzmarke ähnlich sind, aber sich in dem Bereich außerhalb des Zeitintervalls befinden, gar nicht erst berücksichtigt. Lediglich die Bereiche innerhalb des Zeitintervalls werden daher die entsprechend von dem Transponder gesendeten Signale auf das Vorhandensein einer Referenzmarke überprüft. Insgesamt bedeutet dies, dass die Wahrscheinlichkeit einer durch eine solche Marke verursachten fehlerhaften Auswertung signifikant verringert wird.

Dieses Zeitintervall innerhalb eines Symbols ist vorteilhafterweise kleiner als die Dauer des Symbols selbst.

Statt der Verwendung eines einzigen ersten Zeitintervalls, welches beide, also die logische Null und die logische Eins repräsentierende Referenzmarken umfasst, können selbstverständlich auch zwei Zeitintervalle (zweites und drittes Zeitintervall), die jeweils eine dieser beiden Referenzintervalle umschließen, verwendet werden. Dies ist insbesondere dann von Vorteil, wenn die Zeitpunkte innerhalb eines Symbols, bei denen die Referenzmarken zu erwarten sind, sehr weit auseinander liegen. In diesem Falle müsste bei Verwendung eines einzigen Zeitintervalls ein sehr großer Zeitbereich abgedeckt werden, um eine der beiden Referenzmarken sicher zu detektieren. Bei Verwendung von eines zweiten und eines dritten Zeitintervalls kann eben der Bereich zwischen den genannten Zeitpunkten, an denen also keine Referenzmarken zu erwarten sind, unberücksichtigt bleiben. Die Wahrscheinlichkeit einer fehlerhaften Auswertung wird dadurch noch weiter verringert.

In einer vorteilhafterweise Ausgestaltung ist die Summe aus zweitem und drittem Zeitintervall kleiner als das erste Zeitintervall.

In einer besonders vorteilhaften Ausgestaltung kann das Zeitintervall oder die Zeitintervalle entsprechend an die Auflösung des Transponders angepasst werden, indem bei einer sehr hohen Auflösung des Transponders ein zeitlich sehr kleines Zeitintervall bzw. zeitlich sehr kleine Zeitintervalle verwendet wird/werden. Vorteilhafterweise wird das erste, zweite und/oder dritte Zeitintervall an die Auflösung des Transponders derart angepasst, dass bei einer zunehmenden Auflösung des Transponders das erste, zweite und/oder dritte Zeitintervall verringert wird.

Die Erfindung wird nachfolgend anhand der in den schematischen Figuren der Zeichnung angegebenen Ausführungsbeispielen näher erläutert. Es zeigt dabei:
- Figur 1: die grundsätzliche Struktur eines Informationspaketes für den Vorwärts- und/oder Rückwärtslink einer Datenkommunikation zwischen Basisstation und Transponder;
- Figur 2: einen Kopfabschnitt im Vorwärtslink und im Rückwärtslink einer Datenübertragung;
- Figur 3: ein einzelnes Symbol im Rückwärtslink einer Datenkommunikation zwischen Basisstation und Transponder;
- Figur 4: anhand eines Blockschaltbildes den Aufbau eines RFID-Kommunikationssystems enthaltend eine Basisstation und zumindest einen Transponder zur Durchführung des erfindungsgemäßen Verfahrens.

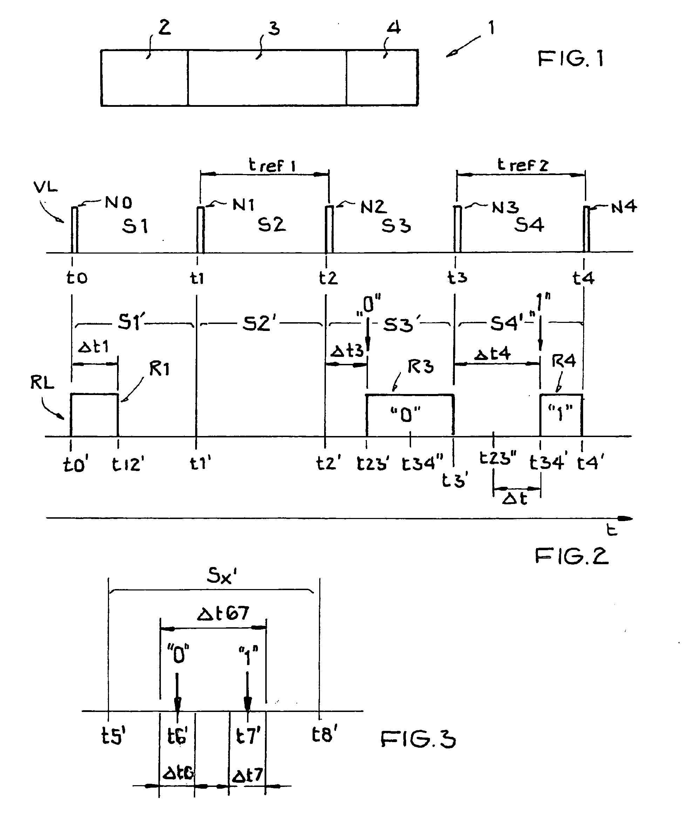

In den Figuren der Zeichnung sind gleiche beziehungsweise funktionsgleiche Elemente, Daten und Signale - sofern nichts anderes angegeben ist - mit denselben Bezugszeichen versehen worden. Die Darstellungen in den Figuren 1 - 3 beziehen sich jeweils auf die zeitliche Abfolge einer jeweiligen Datenkommunikation bezogen auf das Informationspaket.

Die Datenkommunikation zwischen der Basisstation und dem Transponder definiert einen Kanal, der nachfolgend auch als Vorwärtslink VL (engl: forward link oder downlink) bezeichnet wird. Umgekehrt bezeichnet die Datenkommunikation vom Transponder zurück zu der Basisstation einen Kanal, der allgemein als Rückwärtslink RL (engl: return link oder uplink) bezeichnet wird. Zusätzlich zu der Datenkommunikation im Rückwärtslink RL erfolgt bei so genannten, auf Backscattering basierenden Transpondern auch eine Datenkommunikation zwischen Transponder und Basisstation, bei denen ein gesendetes Signal unter Verwendung des Rückstreuquerschnitts der Antenne des Empfängers zurück zum Sender gestreut wird. Dieses Verfahren ist allgemein auch als Backscatter-Verfahren bekannt. Diese Datenkommunikation unter Verwendung der Backscatter-Technik kann sowohl im Vorwärtslink als auch im Rückwärtslink eingesetzt werden.

Die Datenübertragung erfolgt mittels einer Amplituden-modulierten Trägerwelle, die basisstationsseitig ausgesendet wird und vom Transponder zurückgesendet wird. Die auf der Trägerwelle aufmodulierten Daten werden durch Pulspausenmodulierung des Trägersignals erzeugt, indem der Sender der Basisstation für bestimmte Zeitspannen ein elektromagnetisches Feld für das Trägersignal einschaltet oder ausschaltet. Im Transponder wird so eingangsseitig ein von der Feldstärke des Trägersignals abgeleitetes Spannungssignal erzeugt, welches Spannungseinbrüche, die allgemein auch als "Notches" bezeichnet werden, aufweist. Die Dateninformation liegt nun in der Zeitspanne zwischen zweier solcher Spannungseinbrüche. Diese Zeitspanne beinhaltet nun jeweils ein Datensymbol oder kurz ein Symbol. Die Feldlücke, bei der der Sender der Basisstation ausgeschaltet ist beziehungsweise kein elektromagnetisches Trägersignal sendet, bildet so gewissermaßen einen Separator zwischen zwei aufeinanderfolgender Symbole. Die Wertigkeit eines Datensymbols bestimmt sich aus der Zeitspanne, in der das elektromagnetische Feld eingeschaltet ist und somit das Trägersignal seine nominale Amplitude aufweist. Ein Symbol kann nun eine digitale Codierung, zum Beispiel eine logische Null ("0") oder eine logische Eins ("1"), oder zusätzliche Informationen, wie zum Beispiel ein EOF-Symbol, enthalten.

Figur 1 zeigt zunächst die grundsätzliche Struktur eines Informationspaketes 1, wie es für eine Datenkommunikation zwischen einer Basisstation und einem Transponder verwendet wird und wie es beispielsweise aus der eingangs genannten Offenlegungsschrift DE 101 38 217 A1 heraus bekannt ist. In Figur 1 sei angenommen, dass das Informationspaket 1 für die Datenkommunikation im Vorwärtslink VL des Datenkommunikationssystems ausgelegt ist, wenngleich ein auf dieses Informationspaket 1 hin im Rückwärtslink rückübertragenes Informationspaket eine ähnliche Struktur aufweisen kann.

Das Informationspaket 1 weist einen Kopfabschnitt 2, einen Mittelabschnitt 3 sowie einen Endabschnitt 4 auf.

In dem Kopfabschnitt 2 werden die Anzahl der zu übertragenden Datensymbole sowie deren Kennung definiert. Dies ist deshalb erforderlich, um feststellen zu können, an welcher genauen Position ein jeweiliges Feld innerhalb des Mittelabschnittes 3 beziehungsweise des Endabschnittes 4 beginnt. Diese Notwendigkeit ergibt sich aufgrund der Tatsache, dass die Dauer Δt eines Informationspakets 1 im Allgemeinen und der einzelnen Felder 2 - 4 im Speziellen nicht, wie dies bei vielen zeitschlitzbasierten Datenübertragungsverfahren der Fall ist, fest vorgegeben und weitestgehend konstant ist. Vielmehr kann die Dauer Δt und damit die innerhalb eines Informationspakets 1 übertragene Information je nach Applikation mehr oder weniger stark variieren. Mit der Kennung innerhalb des Kopfabschnitts 2 werden die zu übertragenden Daten im Mittelabschnitt 3 kodiert. Insbesondere gibt der Kopfabschnitt 2 Referenzzeiten vor, die für die weitere Datenübertragung im Mittelabschnitt 3 bzw. Datenfeld 5 verwendet werden. Über den Kopfabschnitt 2 wird auch die Geschwindigkeit der Datenkommunikation zwischen Basisstation und Transponder festgelegt, beispielsweise über die Frequenz eines freilaufenden Oszillators im Transponder. Darüber hinaus können in einer sehr vorteilhaften Ausgestaltung im Kopfabschnitt 2 auch Steuerinformationen für die dem Kopfabschnitt 2 nachfolgenden Felder des Mittelabschnittes 3 und des Endabschnittes 4 enthalten sein.

In diesem Zusammenhang wird auch wieder auf die deutsche Offenlegungsschrift DE 101 38 217 A1 verwiesen, insbesondere hinsichtlich des Steuerungsmechanismus über den Kopfabschnitt eines Datenprotokolls, mit welchem die Anzahl der zur Kodierung im Datenbereich verwendeten Symbole und deren Kennung definiert wird.

Der Mittelabschnitt 3 besteht allgemein aus einem Datenfeld sowie einem diesem Datenfeld unmittelbar nachgeschalteten Sicherungsfeld. Im Mittelabschnitt 3 werden kodierte Datensymbole übertragen. Je nach der gewünschten Applikation können hier die unterschiedlichsten Datenstrukturen (long command, short command) vorgesehen sein, auf die jedoch hier nicht näher eingegangen werden soll.

Der Inhalt des Endabschnitts 4 zeigt dem jeweiligen Empfänger des gesendeten Informationspakets 1 das Ende desselben an. Im Falle des eingangs erwähnten Palomarsystems weist der Endabschnitt 4 genau zwei so genannte EOT-Symbole (EOT = End of Transmission) auf.

Figur 2 zeigt beispielhaft jeweils einen Kopfabschnitt im Vorwärtslink VL und im Rückwärtslink RL einer Datenübertragung, anhand dem das erfindungsgemäße Verfahren erläutert wird.

Der Kopfabschnitt 2 im Vorwärtslink VL weist - entsprechend dem eingangs beschriebenen Palomarsystem beziehungsweise der ISO 18000-6 - vier mit Bezugszeichen S1 - S4 bezeichnete Symbole auf. Ein jeweiliges Symbol S1 - S4 ist dabei durch den zeitlichen Abstand zweier benachbarter Notches N0 - N4 definiert. Die Zeitpunkte t0 - t4 bezeichnen jeweils den Zeitpunkt, bei dem ein Notch N0 - N4 vorhanden ist. Bei diesen Notches N0 - N4 handelt es sich um von der Basisstation erzeugte Steuersignale. Bei den Steuersignalen kann es sich insbesondere um eine Feldlücke, bei der die Basisstation für eine vorgegebene Zeit das elektromagnetische Feld ausschaltet, oder um einen Modulationseinbruch, bei dem entsprechend die Modulation für eine vorgegebene Zeit ausgeschaltet wird, handeln.

Jeweils einem Symbol S1 -S4 sind Informationen zugeordnet, die von der Basisstation dem Transponder über den Vorwärtslink zugeführt werden. Über diese Informationen werden Betriebsparameter des Transponders eingestellt, so zum Beispiel folgende Einstellungen:
- Ob der Transponder beziehungsweise die Datenübertragung im Rückwärtslink RL synchron oder asynchron bezogen auf den Vorwärtslink VL erfolgen soll. Diese Einstellung kann beispielsweise über eine relative Zeitdauer zweier oder mehrerer Symbole S1 - S4 vorgenommen werden.
- Einem Symbol S1 - S4 kann die Funktion einer Bitlängenreferenzzeit für ein jeweiliges Bit im Rückwärtslink RL zukommen.
- In welcher Modulationskodierung der Datenstrom von dem Transponder an die Basisstation übermittelt werden soll, beispielsweise in Form einer NRZ-, NRZI-, FM0-, 3phase1- oder dergleichen Modulierung.
- Die Art der Modulation (ASK, PSK), über die der Transponder den Datenstrom zurück zur Basisstation generieren soll.
- Wie viele Teilsymbole der Kopfabschnitt im Rückwärtslink aufweisen soll.

Ein Symbol S1 - S4 im Vorwärtslink VL und ein Symbol S1' - S4' Rückwärtslink RL bezeichnet also eine Information, welche durch ein vorgegebenes Zeitintervall, welches sich aus Referenzzeiten t0' - t4' beziehungsweise t0 - t4 ergibt, bestimmt ist.

Im vorliegenden Ausführungsbeispiel sei angenommen, dass über das zweite Symbol S2 eine Referenzzeit tref vorgegeben ist. Diese Referenzzeit tref1 dient als Referenzzeit für die Modulation im Transponder.

Es sei ferner angenommen, dass über das vierte Symbol S4 eine zweite Referenzzeit tref2 vorgegeben werden kann. Die zweite Referenzzeit tref2 kann beispielsweise im Falle von synchron betriebenen Transpondern, die ihren Systemtakt somit aus dem von der Basisstation gesendeten Signal ableiten, eben für die Bestimmung des Systemtakts im Transponder verwendet werden. Beispielsweise kann der Transponder aus dieser zweiten Referenzzeit tref2 direkt oder durch Herunterteilen einen Transponder internen Systemtakt erzeugen.

Für asynchron betriebene Transponder kann diese zweite Referenzzeit tref2 beispielsweise für die Bestimmung der Datenrate, über die der Transponder im Rückwärtslink RL seine Daten an die Basisstation senden soll, verwendet werden. Insbesondere kann über diese zweite Referenzzeit tref2 damit die Geschwindigkeit der gesamten Datenkommunikation gezielt eingestellt wer den.

Der Transponder entnimmt diese von der Basisstation im Kopfabschnitt 2 gesendeten Informationen und wertet diese aus. Der Transponder stellt nun entsprechend der ersten Referenzzeit tref1 seine Modulation entsprechend ein und erzeugt anhand dieser eingestellten Modulation und ausgehend von seiner Transponder inhärenten Auflösung zwei Referenzmarken R3, R4. Diese beiden Referenzmarken R3, R4 werden im Kopfabschnitt 2 des Rückwärtslinks RL zurück zur Basisstation gesendet und können von dieser ausgewertet werden. Im vorliegenden Fall werden die beiden Referenzmarken R3, R4 im dritten beziehungsweise vierten Symbol S3', S4' des Kopfabschnitts 2 und damit zeitlich gesehen unmittelbar nach dem zweiten Symbol S2, bei dem von der Basisstation die erste Referenzzeit tref1 festgelegt wurde, zurückübertragen.

Die Referenzmarken R3, R4 werden zu einem von dem Transponder vorgegebenen Zeitpunkt t23', t34' innerhalb eines jeweiligen Symbols S3', S4' erzeugt. Die Referenzmarken R3, R4 werden in Form von Signaländerungen oder alternativ auch als Signalimpulse gebildet, die ein Maß für ein eine logische Null beziehungsweise eine logische Eins repräsentierendes Datenbit darstellen. Im vorliegenden Ausführungsbeispiel wird eine logische Null durch eine Anhebung des Signals im Rückwärtslink RL zum Zeitpunkt t23' im Symbol S3' definiert. Entsprechend wird eine logische Eins durch eine Anhebung des Signals im Rückwärtslink RL zum Zeitpunkt t34' im Symbol S4' definiert.

Die Basisstation wertet diese beiden Referenzmarken R3, R4 im dritten und vierten Symbol S3', S4' aus, indem sie den zeitlichen Abstand Δt3 = t23' - t2' beziehungsweise Δt4 = t34' - t3' errechnet. Dieser Auswertung liegt die Maßgabe zugrunde, dass die Basisstation die Zeitpunkte t0' - t4' und dabei insbesondere die Referenzzeiten t2', t3', welche aus den entsprechenden Notches N2, N3 im Vorwärtslink VL abgeleitet sind, genau kennt. Die Zeitpunkte t0' - t4' sind aus den bekannten Zeitpunkten t0 - t4 abgeleitet. Somit kann die Basisstation ermitteln, zu welchen Zeitpunkten t23', t34' innerhalb eines jeweiligen Symbols S3', S4' eine Anhebung eines Signals als logische Null beziehungsweise als logische Eins interpretiert werden kann.

Ausgehend von dieser Auswertung und der damit gewonnenen Informationen kann die Basisstation nun ihrerseits die erste Referenzzeit tref1 entsprechend so ändern beziehungsweise anpassen, dass die jeweiligen Referenzmarken R3, R4 beziehungsweise die diese repräsentierenden Zeitpunkte t23', t34' zu den jeweils von der Basisstation gewünschten Zeitpunkten vorliegen. Insbesondere kann die Basisstation einen zeitlichen Abstand Δt = t34' - t23" (Δt = t34" - t23') derjenigen Zeitpunkte innerhalb eines Symbols S3', S4', an denen jeweils die Anhebungen eines Signals für eine logische Null beziehungsweise für eine logische Eins zu erwarten sind, entsprechend optimieren. Beispielsweise kann dieser zeitliche Abstand Δt im Falle einer hohen Auflösung des Transponders eher gewählt werden, wohingegen im Falle einer niedrigen Auflösung des Transponders der zeitliche Abstand Δt eher größer sein sollte.

Darüber hinaus wäre auch denkbar, dass die Basisstation über die erste Referenzzeit tref1 die jeweils geeignetste Modulationsart für die Modulation des Transponders auswählt.

Somit ist mithin ein Regelungsmechanismus gegeben, bei dem die Basisstation über die erste Referenzzeit tref1 zunächst eine Vorgabeinformation an den Transponder übermittelt, der seinerseits über die Referenzmarken R3, R4 das Ergebnis dieser Vorgaben an die Basisstation zurück überträgt. Die Basisstation kann nun nach Auswertung dieser vom Transponder rückübertragenen Informationen die Vorgabeinformationen, beispielsweise über die erste Referenzzeit tref1, daran anpassen. Dies kann solange geschehen, bis eine gewünschte (optimale) Datenkommunikation vorhanden ist.

Gemäß einem zweiten Aspekt der vorliegenden Erfindung überträgt der Transponder, im vorliegenden Fall im ersten Symbol S1 des Kopfabschnitts 2 des Rückwärtslink RL, eine weitere Referenzmarke R1. Diese Referenzmarke R1 sieht eine Anhebung der Amplitude eines gesendeten Signals zum Zeitpunkt t0' und eine Absenkung dieser Amplitude zum Zeitpunkt t12' vor. Die Zeitdauer Δt1 = t12' - t0' ist hier ein Maß für den Systemtakt des Transponders, so dass über die Referenzmarke R1 eine Taktinformation des Transponders übermittelt wird. Durch Auswertung der Zeitdauer Δt1 in der Basisstation kann die Basisstation nun ihrerseits beispielsweise über die zweite Referenzzeit tref2 im vorzugsweise letzten Symbol S3 diese Dauer Δt1 beeinflussen. Dieses letzte Symbol dient ohnehin der basisstationenseitigen Übermittlung von Taktinformationen an den Transponder. Auf diese Weise lässt sich durch einen weiteren Regelungsmechanismus der Systemtakt des Transponders gezielt auf die jeweiligen Anwendungen einstellen.

Dies ist insbesondere dann von besonderem Vorteil, wenn der Transponder im asynchronen Betriebsmodus befindlich ist und seinen Systemtakt Transponder intern, beispielsweise über einen stromgesteuerten oder spannungsgesteuerten Oszillator (ICO, VCO), generiert. Auf diese Weise kann der Transponder der Basisstation Informationen über seinen Systemtakt mitteilen.

In dem Ausführungsbeispiel in Figur 2 wurde der Rückwärtslink RL synchron zu dem Vorwärtslink VL dargestellt. Die Zeitpunkte t0' - t4' im Rückwärtslink RL entsprechen dann den jeweiligen Zeitpunkten t0 - t4 im Vorwärtslink VL. Die Symbole S1' - S4' im Rückwärtslink und damit die Referenzmarken R1, R3, R4 sind im vorliegenden Ausführungsbeispiel jeweils zeitgleich zu den entsprechenden Symbolen S1 - S4 im Kopfabschnitt 2 des Vorwärtslinks VL. Dies ist allerdings nicht notwendigerweise erforderlich. Wesentlich ist lediglich, dass die Basisstation die Zeitpunkte t0' - t4' im Rückwärtslink RL als Referenzzeiten für den jeweiligen Beginn eines Symbols S1' - S4' im Rückwärtslink RL kennt. In diesem Fall sind die Symbole S1' - S4' zeitversetzt zu den entsprechenden Symbolen S1 - S4 angeordnet.

Denkbar wäre auch, wenn die Referenzmarken R1; R3, R4 jeweils während eines anderen Kopfabschnittes 2 beispielsweise des Kopfabschnittes 2 eines nachfolgenden Informationspakets 1 gesendet werden.

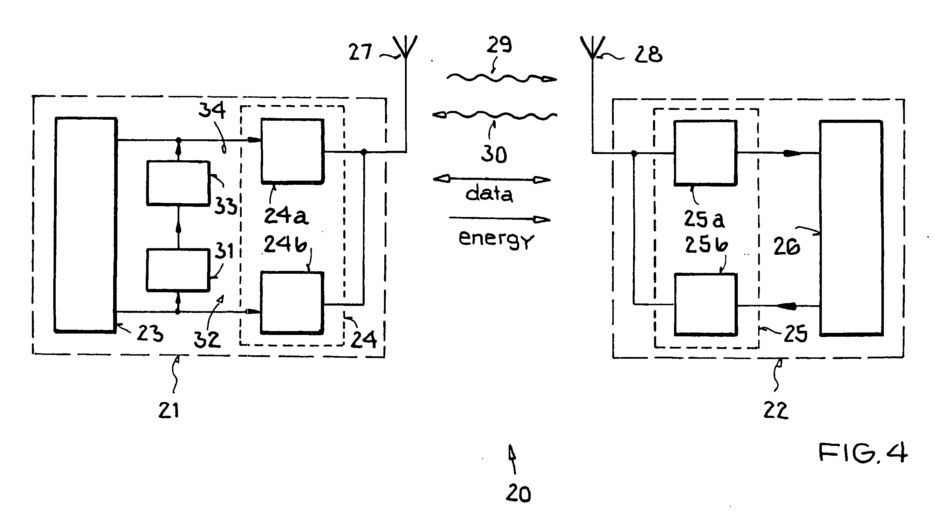

Figur 3 zeigt ein einzelnes Symbol Sx' im Rückwärtslink RL einer Datenkommunikation zwischen Basisstation und Transponder. Dieses Symbol Sx' ist definiert durch den Zeitabschnitt zwischen den Zeiten t5' - t8'. Die Zeitpunkte t6', t7' bezeichnen diejenigen Zeitpunkte, bei denen bezogen auf das jeweilige Symbol Sx' und entsprechend den von dem Transponder vorgegebenen Referenzmarken R3, R4 (siehe Figur 2) jeweils eine logische Null beziehungsweise eine logische Eins zu erwarten ist. Bei bekannten Verfahren musste der gesamte Zeitabschnitt also Δt = t8' - t5' zwischen den Zeitpunkten t5 - t8 eines jeweiligen Symbols Sx' auf eine Anhebung beziehungsweise auch Absenkung des vom Transponder gesendeten Signals untersucht werden. Die erfindungsgemäße Lösung sieht nun vor, dass lediglich das Zeitintervall Δt67 auf eine solche Änderung hin untersucht wird, wobei dieses Zeitintervall Δt67 so gewählt ist, dass es beide Zeitpunkte t6 und t7 umfasst. Es gilt hier also t67 > t7' - t6'

Alternativ wäre auch denkbar, dass zwei Zeitintervalle Δt6, Δt7 vorgesehen sind, die die jeweiligen Zeitpunkte t6' beziehungsweise t7' umschließen.

Der besondere Vorteil dieser beiden Lösungen besteht nun darin, dass lediglich zu diesen Zeitintervallen Δt67 beziehungsweise Δt6, Δt7 ein von dem Transponder im Rückwärtslink RL gesendetes Signal von der Basisstation auf eine Änderung hin und damit auf eine Referenzmarke R1, R3, R4 untersucht wird.

Das oben beschriebene, erfindungsgemäße Verfahren kann zusätzlich oder alternativ wie folgt modifiziert werden:

Überträgt der Transponder im vorzugsweise ersten Symbol S1' des Rückwärtslinks RL eine Information, die sich von der vorherigen unterscheidet, zum Beispiel "Modulation aus" oder "Modulation an", dann kann die Basisstation die Zeit ermitteln, die sie benötigen würde, um diese Änderung sicher zu detektieren. Auf diese Weise ist die Basisstation mithin in die Lage versetzt, die maximale Geschwindigkeit einer Datenübertragung und damit die Baudrate für den dem Kopfabschnitt nachfolgenden Datenabschnitt, der die eigentlichen zu übertragenden Daten enthält, zu übermitteln. Hierbei sind lokale und regionale HF-Regularien, die Empfindlichkeit des Transponders und der Basisstation, ein gegebenenfalls vorhandenes Störspektrum, etc. ebenfalls mit einzubeziehen.

Ändert der Transponder in dem vorzugsweise nachfolgenden Symbol, beispielsweise dem zweiten Symbol S2' des Kopfabschnittes 2, seine Modulation erneut, so kann die Basisstation auch für diese Verhältnisse die Zeit ermitteln, die sie für die Detektion dieser Änderung benötigt. Eine weitere Möglichkeit besteht darin, mit diesem Symbol die Referenz für ein Management des übertragenen Spektrums zu übermitteln.

In einem weiteren Symbol, beispielsweise dem unmittelbar nachfolgenden Symbol S3' kann der Transponder die aus den beiden von der Basisstation gesendeten Symbolen S1, S2 folgende Modulierungskodierung übertragen, welche die Basisstation in die Lage versetzt, die von ihr gemachten Vorgaben, welche sie an den Transponder gesendet hat, zu verifizieren. Zusätzlich ist hier auch möglich, nach dieser Verifikationsphase, das heißt im Anschluss an die drei Symbole eines Kopfabschnitts im Vorwärtslink VL, weitere Kennungen zur weiteren Optimierung der Datenkommunikation zwischen Basisstation und Transponder zu übermitteln.

Das erfindungsgemäße Verfahren eignet sich für alle Modulationsarten im Rückwärtslink RL, so zum Beispiel für eine NRZI-Modulation (Soft oder Hard), eine FM0 Modulation sowie für eine Hochgeschwindigkeitsmodulation wie die 3phase1-Modulation, bei welcher gleichzeitig zwei Bits pro Symbol S1 - S4 übertragen werden.

Eine weitere bevorzugte Ausführungsform der Erfindung ergibt sich, wenn der Transponder innerhalb des vorzugsweise ersten beziehungsweise letzten Symbols S1', S4' nach einer von der Basisstation bekannten Zeit seine Modulation ändert. Da die jeweiligen Anfangszeitpunkte durch die Basisstation durch Festlegung des Systemtaktes bekannt sind, ist es hier möglich, dass die Basisstation eine Information über die Zeitbasis des Transponders erhält. Dies ist insbesondere bei asynchronen Übertragungsprotokollen, beispielsweise für den Datenabschnitt, von besonderem Vorteil, da somit die Basisstation Kenntnis davon erhält, mit welcher Frequenz und mit welcher Toleranz (aufgrund von Jittereffekten) der Transponder die folgenden asynchronen Protokollabschnitte bearbeitet. Darüber hinaus ergibt sich dadurch auch die Möglichkeit, statistische Modulationskodierungen, wie zum Beispiel die NRZ-Modulation, zu verwenden.

Insbesondere bei asynchronen Kommunikationsabschnitten kann mit Hilfe des Kopfabschnittes auch die Datenrate im Rückwärtslink RL definiert eingestellt werden. Hierzu wird aus der Zeitdauer eines oder mehrerer Symbole die Zeitdauer für ein Segment, beispielsweise ein Datenbit, bestimmt. Der Transponder speichert nun seinerseits diese Zeit als Referenz für die Bauderate und damit für die Datenübertragungsgeschwindigkeit. Es ergibt sich damit ein vorgegebenes, definiertes Protokoll für die Datenübertragung. Bisherige Lösungen haben hier lediglich einen Transponder-internen Oszillator als Referenz verwendet. Dieser ist allerdings, da er eine sehr ungenaue Zeitbasis für die Protokollabarbeitung einer Datenkommunikation bietet, für eine exakte Hochgeschwindigkeits-Datenübertragung wenig geeignet.

In einer ebenfalls sehr vorteilhaften Ausgestaltung der Erfindung kann die Basisstation nach der Auswertung der vom Transponder gesendeten Informationen beziehungsweise Referenzmarken entscheiden, auf welche Weise die weitere Datenkommunikation sinnvoll fortgesetzt werden soll. Hierzu muss nicht notwendigerweise auf eine optimale Datenübertragungsgeschwindigkeit abgestellt werden. Vielmehr kann die Basisstation entsprechend ihrer Applikation beziehungsweise anwenderspezifischen Vorgaben ihrerseits bestimmen, ob die vorhandene Einstellung im Transponder beibehalten wird oder verändert wird. Auf diese Weise lässt sich neben der Einstellmöglichkeit einer optimalen Datenübertragung auch eine weitestgehend flexible und intelligente Datenkommunikation zwischen Basisstation und Transponder aufbauen. Insbesondere kann hier auch vorgesehen sein, dass eine Demodulation und Dekodierung im Transponder erst dann eingestellt wird, wenn der Basisstation alle von dem Transponder über die Referenzmarken R1, R3, R4 übermittelten Informationen vorliegen und ausgewertet wurden. In dieser Ausgestaltung würde die Basisstation erst dann die endgültige Modulationsart im Transponder einstellen, was insbesondere aus Stabilitätsgründen besonders vorteilhaft ist, da in diesem Falle die Regelung weniger schwingt.

In einer sehr vorteilhaften Ausgestaltung kann ferner vorgesehen sein, dass über die Referenzmarke R1, welche im ersten Symbol S1' gesendet wird, der Basisstation signalisiert wird, dass die Datenübertragungsrate noch gesteigert werden kann, was insgesamt zu einer höheren Datenübertragungsrate führt. Wertet die Basisstation die in der Referenzmarke R1 enthaltene Information aus, dann kann sie die Datenübertragungsrate auf der Basis dieser Information noch besser einstellen, das heißt, auch sukzessive erhöhen. Dies ist insbesondere dann von Vorteil, wenn der Transponder in der Lage ist, mehrere unterschiedliche Frequenzen für sein internes Taktsystem zu unterstützen.

Umgekehrt kann für den Fall, dass die Basisstation eine zu hohe Datenübertragungsrate vorgegeben hat und damit eine vorgegebene minimale Zeitdauer zwischen zwei benachbarten Notches nicht mehr vorhanden ist, auch vorgesehen sein, dass der Transponder in dem Kopfabschnitt des Rückwärtslinks RL keine Referenzmarken R1, R3, R4 überträgt. Dadurch wird der Basisstation signalisiert, dass eine Korrektur vorzunehmen ist, beispielsweise über eine modifizierte Taktinformation im letzten Symbol S4 des Kopfabschnitts 2.

Figur 4 zeigt anhand eines Blockschaltbildes den Aufbau eines RFID-Kommunikationssystems enthaltend eine Basisstation und zumindest einen Transponder zur Durchführung des erfindungsgemäßen Verfahrens.

Das mit Bezugszeichen 20 bezeichnete Kommunikationssystem weist eine Basisstation 21 sowie einen Transponder 22 auf. Basisstation 21 und Transponder 22 stehen dabei in kommunikativer Verbindung zueinander. Das Kommunikationssystem ist als so genanntes Master-Slave-Kommunikationssystem ausgebildet, wobei die Basisstation als Master und der oder die Transponder jeweils als Slave fungieren. Die Basisstation 21 weist eine Steuereinrichtung 23 sowie eine Sende-/Empfangseinrichtung 24 (Transceiver) auf. In gleicher Weise weist der Transponder 22 eine Sende-/Empfangseinrichtung 25 sowie eine Steuereinrichtung 26 auf. Die Sende-/Empfangseinrichtung 24 der Basisstation 21 ist dazu ausgelegt, über die Antenne 27 hochfrequente Trägersignale 29 zu einer Antenne 28 des Transponders 22 zu senden. In gleicher Weise ist die Sende-/Empfangseinrichtung 25 des Transponders 22 dazu ausgelegt, im Vollduplexbetrieb oder Halbduplexbetrieb auf die gesendeten Signale 29 hin entsprechende Antwortsignale 30 zurück zu der Basisstation 21 zu senden.

Die Steuerung der Datenkommunikation erfolgt jeweils über die Steuereinrichtungen 23 beziehungsweise 26. Die Steuereinrichtung 23, 26 ist beispielsweise eine programmgesteuerte Einrichtung, zum Beispiel ein Mikroprozessor oder Mikrocontroller.

Zur Durchführung des erfindungsgemäßen Verfahrens weist die Basisstation 21 nun eine Auswerteeinrichtung 31 auf. Die Auswerteeinrichtung 31 ist im Empfangspfad 32 der Basisstation 21 angeordnet und dem Empfänger 24a nachgeschaltet angeordnet. Die Auswerteeinrichtung 31 ist ferner über eine Einstelleinrichtung 33 mit dem Sendepfad 34 der Basisstation 21 verbunden.

In der Auswerteeinrichtung 31 erfolgt nun die Auswertung des Kopfabschnittes des von dem Transponder 22 gesendeten Signals im Rückwärtslink RL. Über die Einstelleinrichtung 33 können nun von der Basisstation 21 ihrerseits die über den Kopfabschnitt 2 im Vorwärtslink VL zum Transponder übertragenen Steuerinformationen an die von der Auswerteeinrichtung 31 angepasst werden. Hierzu kommt vorteilhafterweise ein anhand der Figuren 2 und 3 vorstehend beschriebenes, erfindungsgemäßes Verfahren zum Einsatz.

Im vorliegenden Ausführungsbeispiel wurde die Auswerteeinrichtung 31 sowie die Einstelleinrichtung 33 als gesonderte Funktionseinheiten zur besseren Darstellung der Erfindung als gesonderte Funktionseinheiten dargestellt. Typischerweise sind diese Einheiten 31, 33 aber Bestandteil der Steuereinrichtung.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Die Erfindung sei insbesondere nicht ausschließlich auf RFID-Systeme beschränkt, sondern lässt sich selbstverständlich auch erweitern, beispielsweise für die Einzelteilerkennung (engl: item identification). Häufig müssen einzelne Teile nicht eindeutig erkannt werden. Hier reicht es auch meist aus, dass ein Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines fernsteuerbaren Sensors (engl: remote sensor) auf. Die Erfindung betrifft also auch ausdrücklich solche Sensoren, bei denen eine Kommunikation zum Auslesen und Beschreiben von Daten eines Datenträgers bzw. Sensors vorgenommen werden. Als Beispiel für eine solche so genannte ferngesteuerte Sensoranwendung sei auf einen Temperatursensor, einen Drucksensor oder dergleichen verwiesen.

Das vorstehend beschriebene Datenkommunikationssystem - und -verfahren wurden anhand des Prinzips "Reader talks first"-Prinzip beschrieben. Denkbar wäre natürlich auch das Prinzip "Tag talks first", bei dem die Basisstation auf eine Anfrage eines Transponder wartet. Allerdings weist dieses Prinzip eine schlechtere Reaktionszeit auf, so dass vor allem bei modernen so genannten "long range" Datenkommunikationssystem das "Reader talks first"-Prinzip eingesetzt wird.

In Figur 4 wurde der Übersichtlichkeit halber der Aufbau der Basisstation 21 sowie des Transponders 22 bewusst stark vereinfacht dargestellt. Es versteht sich von selbst, dass die für eine Datenkommunikation zwischen Basisstation 21 und Transponder 22 erforderlichen Funktionseinheiten wie Demodulator, Energieversorgung, Synchronisationseinrichtung, Dekodierer und dergleichen in diesen Einheiten 21, 22 vorhanden sind.

### Bezugszeichenliste

- 1: Informationspaket
- 2: Kopfabschnitt
- 3: Mittelabschnitt
- 4: Endabschnitt, EOT-Abschnitt

- 20: Kommunikationssystem
- 21: Basisstation
- 22: Transponder
- 23: Steuereinrichtung
- 24: Sende/Empfangseinrichtung, Transceiver
- 24a: Sendeeinrichtung
- 24b: Empfangseinrichtung
- 25: Sende/Empfangseinrichtung, Transceiver
- 25a: Sendeeinrichtung
- 25b: Empfangseinrichtung
- 26: Steuereinrichtung
- 27: Antenne
- 28: Antenne
- 29: (im Vorwärtslink) gesendete Signale
- 30: (im Rückwärtslink) gesendete Antwortsignale
- 31: Auswerteeinrichtung
- 32: Empfangspfad
- 33: Einstelleinrichtung
- 34: Sendepfad

- R1, R3, R4: Referenzmarken
- RL: Rückwärtslink
- S1 - S4: Symbole im Kopfabschnitt des Vorwärtslinks
- S1' - S4': Symbole im Kopfabschnitt des Rückwärtslinks
- Sx': Symbole im Kopfabschnitt
- Δt: Dauer
- Δt1, Δt3, Δt4: Zeitintervall
- Δt67, Δt6, Δt7: Zeitintervall
- t0 - t4: Zeitpunkte im Vorwärtslink
- t0' - t8': Zeitpunkte im Rückwärtslink
- t12', t23', t34': Zeitpunkte
- t23", t34": Zeitpunkte
- tref1, tref2: Referenzzeiten
- VL: Vorwärtslink

## Patentansprüche

1. Verfahren zur drahtlosen Datenkommunikation zwischen einer Basisstation (21) und zumindest einem Transponder (22) mittels eines hochfrequenten elektromagnetischen Trägersignals, auf das Informationspakete (1) aufmoduliert sind, die einen Kopfabschnitt (2), einen Mittelabschnitt (3) und einen Endabschnitt (4) aufweisen,
wobei der Kopfabschnitt in einem Vorwärtslink (VL) einer Datenkommunikation zwischen Basisstation (21) und Transpondern zur Steuerung der Datenkommunikation vorgesehen ist
und der Kopfabschnitt (2) in einem Rückwärtslink (RL) einer Datenkommunikation genutzt wird, um Betriebsinformationen von einem Transponder (22) zu der mit diesem Transponder (22) kommunizierenden Basisstation (21) zu übermitteln,
**dadurch gekennzeichnet, dass**
die Betriebsinformationen Informationen dahingehend enthalten, ob der Transponder (22) gerade synchron oder asynchron betrieben wird.

2. Verfahren nach Anspruch 1,
**dadurch gekennzeichnet,**
**dass** die Betriebsinformationen des Transponders (22) Informationen über die Datenübertragungsrate des Transponders (22) enthalten.

3. Verfahren nach Anspruch 1 oder 2,
**dadurch gekennzeichnet,**
**dass** die Betriebsinformationen Taktinformationen über den transponderinternen Takt enthalten.

4. Verfahren nach einem der Ansprüche 1 bis 3,
**dadurch gekennzeichnet,**
**dass** die Betriebsinformationen Informationen über die Modulation des Transponders (22) enthalten.

5. Verfahren nach einem der vorstehenden Ansprüche,
**dadurch gekennzeichnet,**
**dass** der Transponder (22) im Kopfabschnitt (2) des Rückwärtslinks (RL) zumindest eine Referenzmarke (R1, R3, R4) an die Basisstation (21) übermittelt, welche von der Basisstation (21) für die weitere Datenkommunikation ausgewertet wird, und dass nach Auswertung dieser zumindest einen Referenzmarke (R1, R3, R4) von der Basisstation (21) die Steuerinformationen im Kopfabschnitt (2) des Vorwärtslinks (VL) an die zumindest eine ausgewertete Referenzmarke (R1, R3, R4) angepasst wird.

6. Verfahren nach einem der vorstehenden Ansprüche,
**dadurch gekennzeichnet,**
**dass** im Rückwärtslink (RL) eine die Taktinformation enthaltende erste Referenzmarke (R1) vorgesehen ist.

7. Verfahren nach Anspruch 6,
**dadurch gekennzeichnet,**
**dass** die erste Referenzmarke (R1) im ersten Symbol (S1') des Kopfabschnitts (2) im Rückwärtslink (RL) übertragen wird.

8. Verfahren nach einem der vorstehenden Ansprüche,
**dadurch gekennzeichnet,**
**dass** im Vorwärtslink (VL) eine erste Referenzzeit (tref1) vorgegeben wird, über welche eine einen logischen ersten Wert ("0") repräsentierende zweite Referenzmarke (R3) und eine einen logischen zweiten Wert ("1") repräsentierende dritte Referenzmarke (R4) definiert werden.

9. Verfahren nach Anspruch 8,
**dadurch gekennzeichnet,**
**dass** die erste Referenzzeit (tref1) von der Basisstation (21) im zweiten Symbol (S2) des Kopfabschnitts (2) im Vorwärtslink (VL) vorgegeben wird.

10. Verfahren nach einem der vorstehenden Ansprüche,
**dadurch gekennzeichnet,**
**dass** im Vorwärtslink (VL) eine zweite Referenzzeit (tref2) vorgegeben wird, über welche eine Taktinformation und/oder Frequenzinformation an den Transponder (22) übermittelt wird.

11. Verfahren nach Anspruch 10,
**dadurch gekennzeichnet,**
**dass** die zweite Referenzzeit (tref2) von der Basisstation (21) im vierten Symbol (S4) des Kopfabschnitts (2) im Vorwärtslink (VL) vorgegeben wird.

12. Verfahren nach einem der vorstehenden Ansprüche,
**dadurch gekennzeichnet,**
**dass** der Kopfabschnitt (2) des Vorwärtslinks (VL) und/oder des Rückwärtslinks (RL) insgesamt vier Symbole (S1 - S4; S1', S4') aufweist.

13. Verfahren nach einem der vorstehenden Ansprüche,
**dadurch gekennzeichnet,**
**dass** eine Referenzmarke (R1, R3, R4) durch mindestens eine Amplitudenänderung zu einem vorgegebenen Zeitpunkt (t0', t12'; t23', t3'; t34', t4') innerhalb eines Symbols (S1 - S4; S1', S4') definiert ist.

14. Verfahren nach einem der vorstehenden Ansprüche,
**dadurch gekennzeichnet,**
**dass** eine Referenzmarke (R1, R3, R4) durch Ausschalten der transponderseitigen Modulation für eine vorgegebene Zeitdauer gebildet wird.

15. Verfahren nach einem der vorstehenden Ansprüche,
**dadurch gekennzeichnet,**
**dass** ein erstes Zeitintervall (Δt67) vorgegeben wird, welches innerhalb eines Symbols (Sx') einen ersten Zeitpunkt (t6), bei dem die erste Referenzmarke (R3) für eine logische Null ("0") angeordnet ist, sowie einen zweiten Zeitpunkt (t7), bei dem die zweite Referenzmarke (R4) für eine logische Eins ("1") angeordnet ist, umfasst.

16. Verfahren nach Anspruch 15,
**dadurch gekennzeichnet,**
**dass** das erste Zeitintervall (Δt67) kleiner ist als die Dauer des jeweils diesem Zeitintervall (Δt67) zugeordneten Symbols (Sx').

17. Verfahren nach einem der vorstehenden Ansprüche,
**dadurch gekennzeichnet,**
**dass** innerhalb eines Symbols (Sx') ein zweites Zeitintervall (Δt6) vorgegeben wird, welches einen ersten Zeitpunkt (t6) umfasst, bei dem die erste Referenzmarke (R3) für eine logische Null ("0") angeordnet ist, und dass ein drittes Zeitintervall (Δt7) vorgegeben wird, welches einen zweiten Zeitpunkt (t7) umfasst, bei dem die zweite Referenzmarke (R4) für eine logische Eins ("1") angeordnet ist.

18. Verfahren nach einem der Ansprüche 15 bis 17,
**dadurch gekennzeichnet,**
**dass** die Summe aus zweiten und dritten Zeitintervall (Δt6, Δt7) kleiner ist als das erste Zeitintervall (Δt67).

19. Verfahren nach einem der Ansprüche 15 bis 18,
**dadurch gekennzeichnet,**
**dass** das erste, zweite und/oder dritte Zeitintervall (Δt6, Δt7, Δt67) an die Auflösung des Transponders (22) derart angepasst wird, dass bei einer zunehmenden Auflösung des Transponders (22) das erste, zweite und/oder dritte Zeitintervall (Δt6, Δt7, Δt67) verringert wird.

20. Basisstation (21) zur Datenkommunikation mit zumindest einem Transponder (22),
- mit einer Sende-/Empfangseinrichtung (24), die zum Senden hochfrequenter Trägersignale (29) an den zumindest einen Transponder (22) und zum Empfangen entsprechender Antwortsignale (30) des die Trägersignale (29) empfangenden zumindest einen Transponders (22) ausgebildet ist,
wobei auf die elektromagnetischen Trägersignale Informationspakete (1) aufmoduliert sind, die einen Kopfabschnitt (2), einen Mittelabschnitt (3) und einen Endabschnitt (4) aufweisen,
wobei der Kopfabschnitt in einem Vorwärtslink (VL) einer Datenkommunikation zwischen Basisstation (21) und Transpondern zur Steuerung der Datenkommunikation vorgesehen ist
und der Kopfabschnitt (2) in einem Rückwärtslink (RL) einer Datenkommunikation genutzt wird, um Betriebsinformationen von einem Transponder (22) zu der mit diesem Transponder (22) kommunizierenden Basisstation (21) zu übermitteln, und
- mit einer Steuereinrichtung (23), die derart ausgebildet ist, dass sie die Datenkommunikation mit dem zumindest einen Transponder (22) steuert,
**gekennzeichnet durch**
- eine der Sende-/Empfangseinrichtung (24) empfangsseitig nachgeschaltete Auswerteeinrichtung (31), die derart ausgebildet ist, dass sie eine Auswertung der im Kopfabschnitt (2) der Antwortsignale (30) enthaltenen Betriebsinformationen vornimmt,
wobei die Betriebsinformationen Informationen dahingehend enthalten, ob der Transponder (22) gerade synchron oder asynchron betrieben wird, und anhand der Betriebsinformationen bestimmt wird, ob der Transponder (22) gerade synchron oder asynchron betrieben wird, und
- eine Einstelleinrichtung (33), die derart ausgebildet ist, dass sie in Abhängigkeit davon, ob der Transponder (22) gerade synchron oder asynchron betrieben wird, eine Anpassung von im Kopfabschnitt (2) des Vorwärtslinks (VL) zum Transponder (22) übertragenen Steuerinformationen vornimmt.

21. RFID-Datenkommunikationssystem (20) mit zumindest einem Transponder (22) und mit zumindest einer Basisstation (21) nach Anspruch 20.

## Claims

1. Method for wireless data communication between a base station (21) and at least one transponder (22) by means of a high-frequency electromagnetic carrier signal, on which data packets (1) having a head section (2), a middle section (3) and an end section (4) are modulated, wherein the head section is provided in a forward link (VL) of a data communication between base station (21) and transponders for control of the data communication and the head section (2) is used in a rearward link (RL) of a data communication in order to transmit operating data from a transponder (22) to the base station (21) communicating with this transponder (22), **characterised in that** the operating data contain data about whether the transponder (22) is then operated synchronously or asynchronously.

2. Method according to claim 1, **characterised in that** the operating data of the transponder (22) contain data about the data transmission rate of the transponder (22).

3. Method according to claim 1 or 2, **characterised in that** the operating data contain cyclic data about the cycle internal to the transponder.

4. Method according to one of claims 1 to 3, **characterised in that** the operating data contain data about the modulation of the transponder (22).

5. Method according to one of the preceding claims, **characterised in that** the transponder (22) in the head section (2) of the rearward link (RL) transmits to the base station (21) at least one reference mark (R1, R3, R4) which is evaluated by the base station (21) for the further data communication and that after evaluation of this at least one reference mark (R1, R3, R4) by the base station (21) the control information in the head section (2) of the forward link (VL) is adapted to the at least one evaluated reference mark (R1, R3, R4).

6. Method according to one of the preceding claims, **characterised in that** a first reference mark (R1) containing the cyclic information is provided in the rearward link (RL).

7. Method according to claim 6, **characterised in that** the first reference mark (R1) is transmitted in the first symbol (S1') of the head section (2) in the rearward link (RL).

8. Method according to one of the preceding claims, **characterised in that** in the forward link (VL) there is predetermined a first reference time (tref1) by way of which a second reference mark (3) representing a logical first value ("0") and a third reference mark (R4) representing a logical second value ("1") are defined.

9. Method according to claim 8, **characterised in that** the first reference time (tref1) is preset by the base station (21) in the second symbol (S2) of the head section (2) in the forward link (VL).

10. Method according to one of the preceding claims, **characterised in that** in the forward link (VL) there is preset a second reference time (tref2) by way of which cyclic information and/or frequency information is or are transmitted to the transponder (22).

11. Method according to claim 10, **characterised in that** the second reference time (tref2) is predetermined by the base station (21) in the fourth symbol (S4) of the head section (2) in the forward link (VL).

12. Method according to one of the preceding claims, **characterised in that** the head section (2) of the forward link (VL) and/or of the rearward link (RL) has in total four symbols (S1 - S4; S1', S4').

13. Method according to one of the preceding claims, **characterised in that** a reference mark (R1, R3, R4) is defined by at least one amplitude change at a predetermined time instant (t0', t12'; t23', t3'; t34', t4') within a symbol (S1 - S4; S1', S4').

14. Method according to one of the preceding claims, **characterised in that** a reference mark (R1, R3, R4) is formed by switching off the modulation at the transponder side for a predetermined period of time.

15. Method according to one of the preceding claims, **characterised in that** a first time interval (Δt67) is predetermined, within which a symbol (Sx') comprises a first time instant (t6), at which the first reference mark (R3) for a logical zero ("0") is arranged, as well as a second time instant (t7), at which the second reference mark (R4) for a logical one ("1") is arranged.

16. Method according to claim 15, **characterised in that** in the first time interval (Δt67) is smaller than the duration of the respective symbol (Sx') associated with this time interval (Δt67).

17. Method according to one of the preceding claims, **characterised in that** within a symbol (Sx') a second time interval (Δt6) is preset which comprises a first time instant (t6) at which the first reference mark (R3) for a logical zero ("0") is arranged, and that a third time interval (Δt7) is preset which comprises a second time instant (t7) at which the second reference mark (R4) for a logical one ("1") is arranged.

18. Method according to one of claims 15 to 17, **characterised in that** the sum of the second and third time intervals (Δt6, Δt7) is smaller than the first time interval (Δt67).

19. Method according to one of claims 15 to 18, **characterised in that** the first, second and/or third time intervals (Δt6, Δt7, Δt67) are adapted to the resolution of the transponder (22) in such a manner that in the case of an increasing resolution of the transponder (22) the first, second and/or third time interval Δt6, Δt7, Δt67) is or are reduced.

20. Base station (21) for data communication with at least one transponder (22), with a transmitter/receiver device (24), which is constructed for transmission of high-frequency carrier signals (29) to the at least one transponder (22) and for reception of corresponding answer signals (30) of the at least one transponder (22) receiving the carrier signals (29), wherein data packets (1) having a head section (2), a middle section (3) and an end section (4) are modulated on the electromagnetic carrier signals, wherein the head section is provided in a forward link (VL) of a data communication between base station (21) and transponders for control of the data communication and the head section (2) is used in a rearward link (RL) of a data communication in order to transmit operating data from a transponder (22) to the base station (21) communicating with this transponder (22), and with a control device (23) which is constructed in such a manner that it controls the data communication with the at least one transponder (22), **characterised by** an evaluating device (31) which is connected downstream of the transmitter/receiver device (24) at the receiving side and which is constructed in such a manner that it undertakes evaluation of the operating data contained in the head section (2) of the answer signals (30), wherein the operating data contain data about whether the transponder (22) is then operated synchronously or asynchronously and on the basis of the operating data it is determined whether the transponder (22) is then operated synchronously or asynchronously, and a setting device (33) which is constructed in such a manner that depending on whether the transponder (22) is then operated synchronously or asynchronously it undertakes adaptation of control data transmitted to the transponder (22) in the head section (2) of the forward link (VL).

21. RFID data communication system (20) with at least one transponder (22) and with at least one base station (21) according to claim 20.

## Revendications

1. Procédé de communication sans fil de données entre une station de base (21) et au moins un transpondeur (22) au moyen d'un signal porteur électromagnétique à haute fréquence, sur lequel sont modulés des paquets d'informations (1) qui présentent une section d'en-tête (2) une section intermédiaire (3) et une section finale (4),
dans lequel la section d'en-tête est prévue dans une liaison en sens direct (VL) d'une communication de données entre la station de base (21) et des transpondeurs pour le contrôle de la communication de données,
et la section d'en-tête (2) est utilisée dans une liaison en sens inverse (RL) de la communication de données pour communiquer des informations de fonctionnement d'un transpondeur (22) à la station de base (21) communiquant avec ce transpondeur (22),
**caractérisé en ce que** les informations de fonctionnement comprennent des informations relatives au fait de savoir si le transpondeur (22) est à ce moment en fonctionnement synchrone ou asynchrone.

2. Procédé selon la revendication 1, **caractérisé en ce que** les informations de fonctionnement du transpondeur (22) comprennent des informations sur le taux de transmission de données du transpondeur (22).

3. Procédé selon la revendication 1 ou 2, **caractérisé en ce que** les informations de fonctionnement comprennent des informations de cadence relatives à la cadence interne du transpondeur.

4. Procédé selon l'une quelconque des revendications 1 à 3, **caractérisé en ce que** les informations de fonctionnement comprennent des informations relatives à la modulation du transpondeur (22).

5. Procédé selon l'une quelconque des revendications précédentes, **caractérisé en ce que** dans la section d'en-tête (2) de la liaison en sens inverse (RL) le transpondeur (22) transmet au moins une marque de référence (R1,R3,R4) à la station de base (21) qui est exploitée par la station de base (21) pour la communication ultérieure de données, et **en ce qu'**après exploitation de cet au moins une marque de référence (R1,R3,R4) par la station de base (21), les informations de commande dans la section d'en-tête (2) de la liaison en sens direct (VL) sont adaptées à l'au moins une marque de référence (R1,R3,R4) exploitée.

6. Procédé selon l'une quelconque des revendications précédentes, **caractérisé en ce que** l'on prévoit dans la liaison en sens inverse (RL) une première marque de référence (R1) contenant l'information relative à la cadence.

7. Procédé selon la revendication 6, **caractérisé en ce que** la première marque de référence (R1) est transmise dans le premier symbole (S1') de la section d'en-tête (2) de la liaison en sens inverse (RL).

8. Procédé selon l'une quelconque des revendications précédentes, **caractérisé en ce que** l'on spécifie dans la liaison en sens direct (VL) un premier temps de référence (tref1), par lequel sont définis une deuxième marque de référence (R3) représentant une première valeur logique ("0") et une troisième marque de référence (R4) représentant une deuxième valeur logique ("1").

9. Procédé selon la revendication 8, **caractérisé en ce que** le premier temps de référence (tref1) est spécifié par la station de base (21) dans le deuxième symbole (S2) de la section d'en-tête (2) dans la liaison en sens direct (VL).

10. Procédé selon l'une quelconque des revendications précédentes, **caractérisé en ce que** l'on spécifie dans la liaison en sens direct (VL) un deuxième temps de référence (tref2), par lequel on transmet une information de cadence et/ou de fréquence au transpondeur (22).

11. Procédé selon la revendication 10, **caractérisé en ce que** la deuxième référence de temps (tref2) est spécifiée par la station de base (21) dans le quatrième symbole (S4) de la section d'en-tête (2) de la liaison en sens direct (VL).

12. Procédé selon l'une quelconque des revendications précédentes, **caractérisé en ce que** la section d'en-tête (2) de la liaison en sens direct (VL) et/ou de la liaison en sens inverse (RL) présente globalement quatre symboles (S1-S4;S1',S4').

13. Procédé selon l'une quelconque des revendications précédentes, **caractérisé en ce qu'**une marque de référence (R1,R3,R4) est définie par au moins une variation d'amplitude à un moment prédéfini (t0',t12';t23',t3';t34',t4') à l'intérieur d'un symbole (S1-S4;S1',S4').

14. Procédé selon l'une quelconque des revendications précédentes, **caractérisé en ce qu'**une marque de référence (R1,R3,R4) est constituée par l'interruption de la modulation du côté transpondeur pendant une durée prédéterminée.

15. Procédé selon l'une quelconque des revendications précédentes, **caractérisé en ce que** l'on spécifie un premier intervalle de temps (Δt67) qui à l'intérieur d'un symbole (Sx') comprend un premier moment (t6) où la première marque de référence (R3) est placée pour un zéro logique ("0"), ainsi qu'un deuxième moment (t7), où la deuxième marque de référence (R4) est placée pour un un logique ("1").

16. Procédé selon la revendication 15, **caractérisé en ce que** le premier intervalle de temps (Δt67) est inférieur à la durée du symbole (Sx') respectif associé à cet intervalle de temps (Δt67).

17. Procédé selon l'une quelconque des revendications précédentes, **caractérisé en ce qu'**à l'intérieur d'un symbole (Sx') on spécifie un deuxième intervalle de temps (Δt6), comprenant un premier moment (t6) où la première marque de référence (R3) est placée pour un zéro logique ("0"), et **en ce qu'**on spécifie un troisième intervalle de temps (Δt7) comprenant un deuxième moment (t7) où la deuxième marque de référence (R4) est placée pour un un logique ("1").

18. Procédé selon l'une quelconque des revendications 15 à 17, **caractérisé en ce que** la somme des deuxième et troisième intervalles de temps (Δt6,Δt7) est inférieure au premier intervalle de temps (Δt67).

19. Procédé selon l'une quelconque des revendications 15 à 18, **caractérisé en ce que** le premier, deuxième et/ou troisième intervalle de temps (Δt6,Δt7,Δt67) sont adaptés de telle façon à la résolution du transpondeur (22) que lorsque la résolution du transpondeur (22) augmente, le premier, deuxième et/ou troisième intervalle de temps (Δt6,Δt7,Δt67) diminue.

20. Station de base (21) pour la communication de données avec au moins un transpondeur (22),
. comprenant un dispositif d'émission-réception (24) conçu pour envoyer des signaux porteurs à haute fréquence (29) à l'au moins un transpondeur (22) et recevoir des signaux en réponse correspondants (30) de l'au moins un transpondeur (22) recevant les signaux porteurs (29),
des paquets d'information (1) étant modulés sur les signaux porteurs électromagnétiques, qui présentent une section d'en-tête (2), une section intermédiaire (3) et une section finale (4)
la section d'en-tête étant prévue dans une liaison en sens direct (VL) d'une communication de données entre la station de base (21) et les transpondeurs pour commander la communication de données,
et la section d'en-tête (2) étant utilisée dans une liaison en sens inverse (RL) d'une communication de données pour transmettre des informations de fonctionnement d'un transpondeur (22) à la station de base (21) communiquant avec ce transpondeur (22),
. comprenant un dispositif de commande (23) conçu de telle manière qu'il commande la communication de données avec l'au moins un transpondeur (22),
**caractérisée par**
. un dispositif d'analyse (31) disposé en aval du dispositif d'émission/réception (24) du côté réception, conçu de telle façon qu'il procède à une analyse des informations de fonctionnement contenues dans la section d'en-tête (2) des signaux en réponse (30)
les informations de fonctionnement contenant des informations relatives au fait de savoir si le transpondeur (22) est à ce moment en fonctionnement synchrone ou asynchrone, et le mode de fonctionnement à ce moment du transpondeur (22), synchrone ou asynchrone, étant déterminé à partir des informations de fonctionnement,
. et par un dispositif de réglage (33) conçu de telle façon qu'en fonction de l'état de fonctionnement à ce moment synchrone ou asynchrone du transpondeur (22), il effectue une adaptation d'informations de fonctionnement transmises de la section d'en-tête (2) de la liaison en sens direct (VL) au transpondeur (22).

21. Système de communication de données RFID (20) comprenant au moins un transpondeur (22) et au moins une station de base (21) selon la revendication 20.
